# EUROPEAN PATENT APPLICATION

(11) **EP 3 261 299 A1**
(43) Date of publication of application: **27.12.2017**
(21) Application number: 15886061.9
(22) Date of filing: 29.09.2015
(51) Int. Cl.: H04L 12/46

(54) **METHOD AND APPARATUS FOR ESTABLISHING NETWORK SERVICE INSTANCE**

(30) Priority: 23.03.2015 CN 201510130678
(71) Applicant: ZTE Corporation, Shenzhen, Guangdong 518057 (CN)
(72) Inventor: ZHU, Weihong, Shenzhen Guangdong 518057 (CN)
(74) Representative: Awapatent AB
(86) International application number: PCT/CN2015/091135
(87) International publication number: WO 2016/150139

(57) **Abstract**

The document discloses a method and an apparatus for establishing a network service instance. The method includes: receiving a network service instantiation request from a Network Management System (NMS); determining a network service descriptor for instantiating a network service; generating a network service instance and allocating a network service instance identifier to the generated network service instance; and performing a network service instantiation according to the determined network service descriptor and the allocated network service instance identifier.

## Description

### Technical Field

The present application relates to but is not limited to a virtualized network technology.

### Background

In the management field of radio communication systems, an interface between a Network Management System (NMS) and an Element Management System (EMS) is called a Northbound Interface (Itf-N). Herein EMS mainly completes a function of an Element Management Layer (EML) in an International Telecommunication Union (ITU) Telecommunication Management Network (TMN), i.e., completes a management function of one or more mobile communication devices. Usually, EMSs of different device suppliers cannot be used mutually. NMS mainly completes a function of a Network Management Layer (NML) in the ITU TMN, and is responsible for management of all network elements in a managed network. When there are multiple device suppliers in the managed network (called a subnetwork), NMS may achieve the purpose of managing the entire subnetwork through EMS of each device supplier.

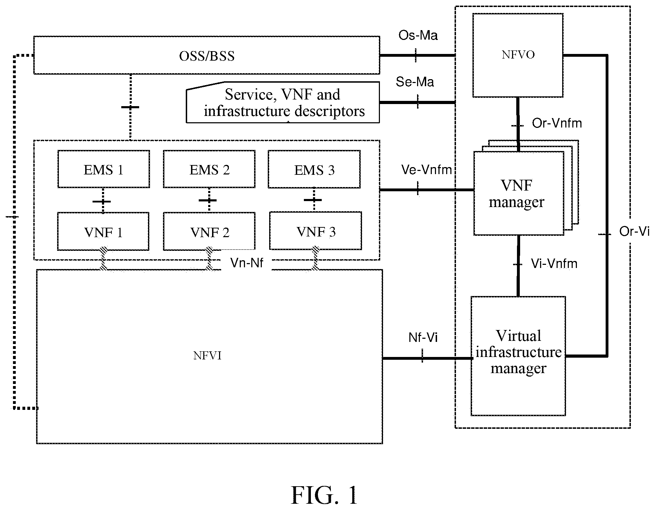

At present, to realize the flexibility of communication networks and decrease the management cost, operators initiate and put forward a Network Functions Virtualization (NFV) concept. Under a situation that the NFV technology is used, an original physical network element device is replaced by Virtualized Network Function (VNF), such that the network function is decoupled from specific hardware. FIG. 1 illustrates a structural schematic diagram of a reference architecture of network functions virtualization. As illustrated in FIG. 1, VNF operates on Network Functions Virtualization Infrastructure (NFVI) at a bottom layer and is isolated from the hardware in NFVI. In FIG. 1, the EMS is used for performing traditional maintenance management on the VNF. And a VNF Management (VNFM) is used for performing management on a life cycle of the VNF. The VNF is used for implementing specific network services. A Network Functions Virtualization Orchestrator (NFVO) is used for performing management on network services. A virtualization infrastructure manager is used for performing management on the hardware in NFVI. After network functions virtualization is implemented, from a view of an application layer, to implement network services, a network service instance firstly needs to be established. However, up to now, there is no existing art which provides a specific implementation solution.

### Summary

What is described below is a summary of the subject described in detail in the document. The summary is not intended to limit the protection scope of the claims.

The document provides a method and an apparatus for establishing a network service instance, which can implement a network service instantiation.

A method for establishing a network service instance includes:
receiving a network service instantiation request from a Network Management System (NMS);
determining a network service descriptor for instantiating a network service according to the received network service instantiation request;
generating a network service instance according to the network service instantiation request and allocating a network service instance identifier to the generated network service instance; and
performing a network service instantiation according to the determined network service descriptor and the allocated network service instance identifier.

In an exemplary embodiment, after receiving the network service instantiation request from the NMS and before determining the network service descriptor for instantiating the network service according to the received network service instantiation request, the method further includes: judging that the received network service instantiation request is valid.

In an exemplary embodiment, the step of performing a network service instantiation includes:
when determining that there is a VNF which needs to be instantiated in a Virtualized Network Function Descriptor (VNFD) list of the network service descriptor, sending a VNF instantiation request to a VNF Manager (VNFM), herein the VNF instantiation request carries the network service instance identifier; and
receiving a VNF instantiation complete message from the VNFM, and adding a VNF instance identifier in the VNF instantiation complete message into a VNF instance list in the generated network service instance.

In an exemplary embodiment, the step of determining that there is a VNF which needs to be instantiated in a VNFD list of the network service descriptor includes:
judging that one or more VNFDs in the VNFD list have no corresponding available instance.

In an exemplary embodiment, the step of performing a network service instantiation includes:
when determining that there is no VNF which needs to be instantiated in a VNFD list of the network service descriptor and determining that there is a Virtualized Network Function Forwarding Graph (VNF FG) which needs to be instantiated in a VNF FG descriptor list of the network service descriptor, generating a VNF FG instance according to a VNF FG descriptor which needs to be instantiated in the VNF FG descriptor list, and setting a parent network service parameter parent_ns in the generated VNF FG instance to be consistent with the allocated network service instance identifier; and
generating a virtual link instance according to a virtual link descriptor list in the VNF FG descriptor which needs to be instantiated, and setting a parameter parent_ns in the generated virtual link instance to be consistent with the allocated network service instance identifier.

In an exemplary embodiment, the step of determining that there is a VNF FG which needs to be instantiated in a VNF FG descriptor list of the network service descriptor includes:
judging that one or more VNF FG descriptors in the VNF FG descriptor list have no corresponding available instance.

An apparatus for establishing a network service instance includes a receiving module, a determination module, a generation module and an instantiation module.

The receiving module is configured to receive a network service instantiation request from a Network Management System (NMS).

The determination module is configured to determine a network service descriptor for instantiating a network service according to the received network service instantiation request.

The generation module is configured to generate a network service instance according to the network service instantiation request and allocate a network service instance identifier to the generated network service instance.

The instantiation module is configured to perform a network service instantiation according to the determined network service descriptor and the allocated network service instance identifier.

In an exemplary embodiment, the determination module is configured to,
judge that the received network service instantiation request is valid, and determine the network service descriptor for instantiating the network service according to the received network service instantiation request.

In an exemplary embodiment, the instantiation module is configured to,
when it is determined that there is a VNF which needs to be instantiated in a Virtualized Network Function Descriptor (VNFD) list of the network service descriptor, send a VNF instantiation request to a VNF Manager (VNFM), herein the VNF instantiation request carries the network service instance identifier; and
receive a VNF instantiation complete message from the VNFM, and add a VNF instance identifier in the VNF instantiation complete message into a VNF instance list in the generated network service instance.

In an exemplary embodiment, the instantiation module is configured to,
when it is determined that there is no VNF which needs to be instantiated in a VNFD list of the network service descriptor and determined that there is a Virtualized Network Function Forwarding Graph (VNF FG) which needs to be instantiated in a VNF FG descriptor list of the network service descriptor, generate a VNF FG instance according to a VNF FG descriptor which needs to be instantiated in the VNF FG descriptor list, and set a parent network service parameter parent_ns in the generated VNF FG instance to be consistent with the allocated network service instance identifier; and
generate a virtual link instance according to a virtual link descriptor list in the VNF FG descriptor which needs to be instantiated, and set a parameter parent ns in the generated virtual link instance to be consistent with the allocated network service instance identifier.

A computer-readable storage medium storing computer-executable instructions is provided, and the computer-executable instructions are used for executing any one of the methods.

As compared with the existing art, the method provided by embodiments of the present invention includes the following steps: receiving a network service instantiation request from a NMS; determining a network service descriptor for instantiating a network service according to the received network service instantiation request; generating a network service instance according to the network service instantiation request and allocating a network service instance identifier to the generated network service instance; and performing a network service instantiation according to the determined network service descriptor and the allocated network service instance identifier. By adopting the solution provided by the embodiments of the present invention, the network service instantiation is implemented according to the determined network service descriptor and the allocated network service instance identifier.

After the drawings and the detailed description are read and understood, other aspects can be understood.

### Brief Description of Drawings

FIG. 1 illustrates a structural schematic diagram of a reference architecture of network functions virtualization in an existing art.
FIG. 2 illustrates a flowchart of a method for establishing a network service instance according to an embodiment of the present invention.
FIG. 3 illustrates a flowchart of an embodiment of a method for establishing a network service instance according to an embodiment of the present invention.
FIG. 4 illustrates a structural schematic diagram of an apparatus for establishing a network service instance according to an embodiment of the present invention.

### Detailed Description

Embodiments of the present invention will be described below with reference to the drawings. It needs to be stated that the embodiments in the present application and the modes in the embodiments may be mutually combined under a situation of no conflict.

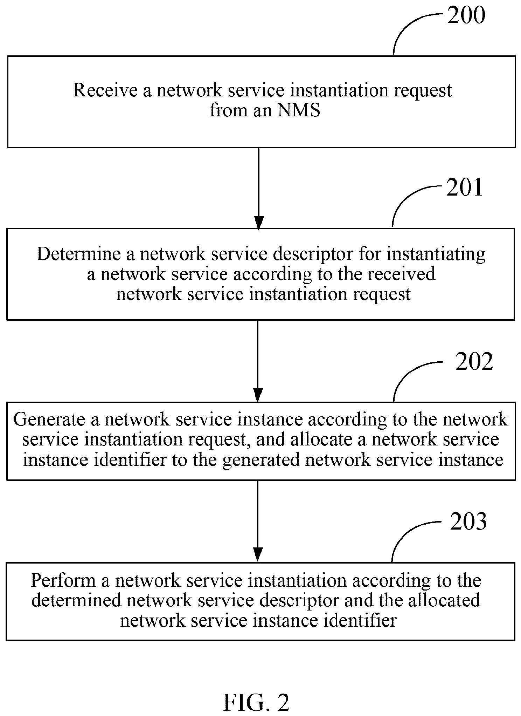

Referring to FIG. 2, an embodiment of the present invention provides a method for establishing a network service instance, including the following steps 200-203.

In step 200, a network service instantiation request is received from an NMS.

In this step, the network service instantiation request at least includes a network service descriptor identifier.

In step 201, a network service descriptor for instantiating a network service is determined according to the received network service instantiation request.

In this step, a corresponding network service descriptor is determined according to the network service descriptor identifier carried in the network service instantiation request. After the network service instantiation request is received from the NMS and before the network service descriptor for instantiating the network service is determined according to the received network service instantiation request, the method further includes the following step:
judging that the received network service instantiation request is valid.

Herein, when it is judged that the received network service instantiation request is invalid, this process is ended.

In step 202, a network service instance is generated according to the network service instantiation request, and a network service instance identifier is allocated to the generated network service instance.

In this step, multiple methods may be adopted to allocate the network service instance identifier to the generated network service instance, as long as the allocated network service instance identifiers do not conflict with one another. For example, the network service instance identifiers may be allocated according to a sequence.

Herein, the step 201 and the step 202 may be synchronously executed, and the step 202 may also be firstly executed and then the step 201 is executed. In step 203, a network service instantiation is performed according to the determined network service descriptor and the allocated network service instance identifier, which includes the following operations.

When it is determined that there is a VNF which needs to be instantiated in a Virtualized Network Function Descriptor (VNFD) list in the network service descriptor, a VNF instantiation request is sent to a VNF Manager (VNFM). The VNF instantiation request carries the network service instance identifier. A VNF instantiation complete message is received from the VNFM, and a VNF instance identifier in the VNF instantiation complete message is added into a VNF instance list in the generated network service instance.

In an embodiment, after the VNF instance identifier in the VNF instantiation complete message is added into the VNF instance list in the generated network service instance, it may also be continued to execute the operation of judging whether there is a VNF which needs to be instantiated in the VNFD list in the determined network service descriptor.

In an embodiment, after the VNFM receives the VNF instantiation request, a VNF instance is generated, and a parent network service parameter (parent_ns) in the generated VNF instance is set to be consistent with the allocated network service instance identifier, and a VNF instantiation complete message is sent.

In an embodiment, the operation of judging whether there is a VNF which needs to be instantiated in the VNFD list in the determined network service descriptor includes the following operations.

If it is judged that all VNFDs in the VNFD list have corresponding available instances, it is judged that there is no VNF which needs to be instantiated in the VNFD list. If it is judged that one or more VNFDs in the VNFD list have no corresponding available instance, it is judged that there is a VNF which needs to be instantiated in the VNFD list.

In an embodiment, when it is judged that there is no VNF which needs to be instantiated any longer in the VNFD list in the determined network service descriptor, whether there is a VNF Forwarding Graph (VNF FG) which needs to be instantiated in the VNF FG descriptor list in the determined network service descriptor is judged. If yes, a VNF FG instance is generated according to the VNF FG descriptor which needs to be instantiated in the VNF FG descriptor list, and a parameter parent_ns in the generated VNF FG instance is set to be consistent with the allocated network service instance identifier. And a virtual link instance is generated according to a virtual link descriptor list in the VNF FG descriptor which needs to be instantiated, and a parameter parent_ns in the generated virtual link instance is set to be consistent with the allocated network service instance identifier.

In an embodiment, after the parameter parent ns in the generated virtual link instance is set to be consistent with the allocated network service instance identifier, it may be further continued to execute the operation of judging whether there is a VNF FG which needs to be instantiated in the VNF FG descriptor list in the determined network service descriptor.

In an embodiment, when it is judged that there is no VNF FG which needs to be instantiated in the VNF FG descriptor list in the determined network service descriptor, this process is ended.

Herein, the operation of judging whether there is a VNF FG which needs to be instantiated in the VNF FG descriptor list in the determined network service descriptor includes the following operations.

If it is judged that all VNF FG descriptors in the VNF FG descriptor list have corresponding available instances, it is judged that there is no VNF FG which needs to be instantiated in the VNF FG descriptor list. If it is judged that one or more VNF FG descriptors in the VNF FG descriptor list have no corresponding available instance, it is judged that there is a VNF FG which needs to be instantiated in the VNF FG descriptor list.

It needs to be stated that the generation of the network service instance in the step 202 refers to the generation of the instance of the network service itself, and the instantiation of the network service in the step 203 refers to an instantiation of VNF and vLink forming this network service, so they are different.

The method provided by an embodiment of the present invention will be described below in detail.

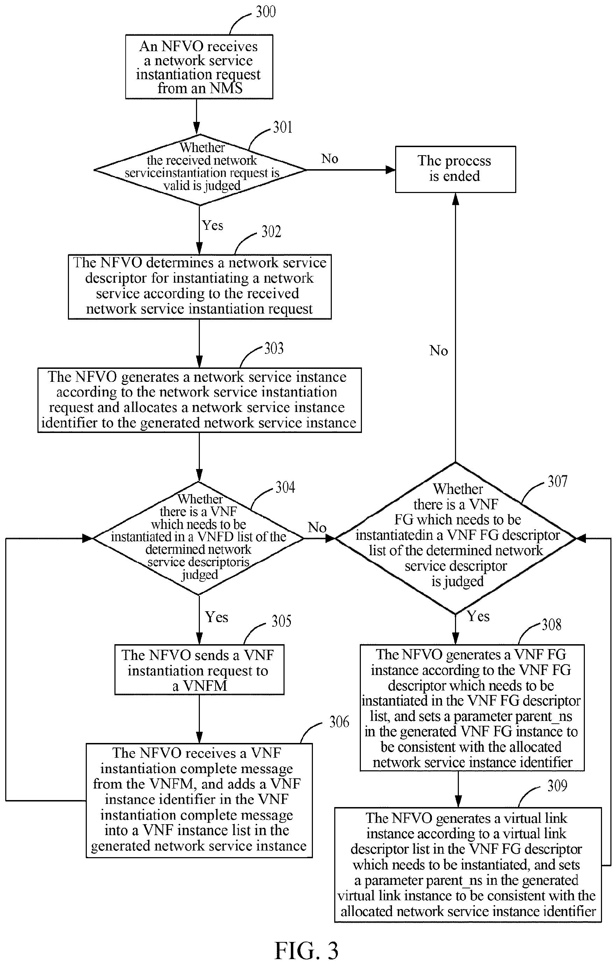

Referring to FIG. 3, the method includes the following steps 300-309.

In step 300, an NFVO receives a network service instantiation request from an NMS.

In step 301, whether the received network service instantiation request is valid is judged; and if the received network service instantiation request is valid, step 302 will be executed; and if the received network service instantiation request is invalid, this process will be ended.

In step 302, the NFVO determines a network service descriptor for instantiating a network service according to the received network service instantiation request.

In step 303, the NFVO generates a network service instance according to the received network service instantiation request and allocates a network service instance identifier to the generated network service instance.

In step 304, the NFVO judges whether there is a VNF which needs to be instantiated in a VNFD list in the determined network service descriptor; and if there is a VNF which needs to be instantiated, step 305 will be executed; and if there is no VNF which needs to be instantiated, step 307 will be executed.

In step 305, the NFVO sends a VNF instantiation request to a VNFM.

In step 306, the NFVO receives a VNF instantiation complete message from the VNFM, adds a VNF instance identifier in the VNF instantiation complete message into a VNF instance list in the generated network service instance, and continues to execute the step 304.

In step 307, the NFVO judges whether there is a VNF FG which needs to be instantiated in a VNF FG descriptor list in the determined network service descriptor; and if there is a VNF FG which needs to be instantiated, step 308 will be executed; and if there is no VNF FG which needs to be instantiated, this process will be ended.

In step 308, the NFVO generates a VNF FG instance according to the VNF FG descriptor which needs to be instantiated in the VNF FG descriptor list, and sets a parameter parent_ns in the generated VNF FG instance to be consistent with the allocated network service instance identifier.

In step 309, the NFVO generates a virtual link instance according to a virtual link descriptor list in the VNF FG descriptor which needs to be instantiated, and sets a parameter parent ns in the generated virtual link instance to be consistent with the allocated network service instance identifier; and executes the step 307.

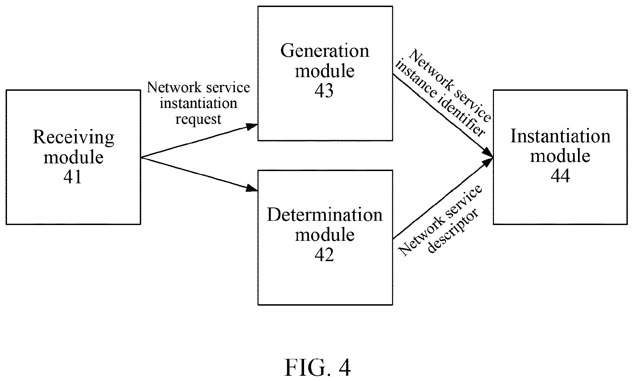

Referring to FIG. 4, an embodiment of the present invention further provides an apparatus for establishing a network service instance, at least including a receiving module 41, a determination module 42, a generation module 43 and an instantiation module 44.

The receiving module 41 is configured to receive a network service instantiation request from a Network Management System (NMS).

The determination module 42 is configured to determine a network service descriptor for instantiating a network service according to the received network service instantiation request.

The generation module 43 is configured to generate a network service instance according to the network service instantiation request and allocate a network service instance identifier to the generated network service instance.

The instantiation module 44 is configured to perform a network service instantiation according to the determined network service descriptor and the allocated network service instance identifier.

In the apparatus provided by the embodiment of the present invention, the determination module 42 is configured to,
judge that the received network service instantiation request is valid, and determine the network service descriptor for instantiating the network service according to the received network service instantiation request.

In the apparatus provided by the embodiment of the present invention, the instantiation module 44 is configured to,
when it is determined that there is a VNF which needs to be instantiated in a Virtualized Network Function Descriptor (VNFD) list in the network service descriptor, send a VNF instantiation request to a VNF Manager (VNFM), herein the VNF instantiation request carries the network service instance identifier; and
receive a VNF instantiation complete message from the VNFM, and add a VNF instance identifier in the VNF instantiation complete message into a VNF instance list in the generated network service instance.

In the apparatus provided by the embodiment of the present invention, the instantiation module 44 is configured to,
when it is determined that there is no VNF which needs to be instantiated in the VNFD list in the network service descriptor and determined that there is a Virtualized Network Function Forwarding Graph (VNF FG) which needs to be instantiated in a VNF FG descriptor list in the network service descriptor, generate a VNF FG instance according to a VNF FG descriptor which needs to be instantiated in the VNF FG descriptor list, and set a parameter parent_ns in the generated VNF FG instance to be consistent with the allocated network service instance identifier; and
generate a virtual link instance according to a virtual link descriptor list in the VNF FG descriptor which needs to be instantiated, and set a parameter parent_ns in the generated virtual link instance to be consistent with the allocated network service instance identifier.

One ordinary skilled in the art can understand that all or partial steps in the above-mentioned embodiments may be implemented by using a computer program. The computer program may be stored in a computer-readable storage medium. The computer program is executed on a corresponding hardware platform (such as system, equipment, apparatus or device or the like). When the computer program is executed, one or combinations of steps of the method embodiment are included.

In an exemplary embodiment, all or partial steps in the above-mentioned embodiments may also be implemented by using integrated circuits, and these steps may be respectively manufactured into individual integrated circuit modules, or more modules or steps thereof may be manufactured into a single integrated circuit module to implement.

Each device/function module/function unit in the above-mentioned embodiments may be implemented by adopting a general-purpose computing device, and they may be integrated on a single computing device and may also be distributed on a network consisting of multiple computing devices.

When each device/function module/function unit in the above-mentioned embodiments is implemented by means of software function module and is sold or used as an independent product, it may be stored in a computer-readable storage medium. The above-mentioned computer-readable storage medium may be a read-only memory, a magnetic disk, a compact disk or the like.

### Industrial Applicability

In the embodiments of the present invention, a network service descriptor for instantiating a network service is determined according to a received network service instantiation request, and a network service instance is generated, and a network service instance identifier is allocated to the generated network service instance; and a network service instantiation is performed according to the determined network service descriptor and the allocated network service instance identifier. By adopting the solution provided by the embodiments of the present invention, the network service instantiation is implemented according to the determined network service descriptor and the allocated network service instance identifier.

## Claims

1. A method for establishing a network service instance, comprising:
receiving a network service instantiation request from a Network Management System, NMS;
determining a network service descriptor for instantiating a network service according to the received network service instantiation request;
generating a network service instance according to the network service instantiation request, and allocating a network service instance identifier to the generated network service instance; and
performing a network service instantiation according to the determined network service descriptor and the allocated network service instance identifier.

2. The method according to claim 1, wherein, after receiving the network service instantiation request from the NMS and before determining the network service descriptor for instantiating the network service according to the received network service instantiation request, the method further comprises: judging that the received network service instantiation request is valid.

3. The method according to claim 1, wherein the performing a network service instantiation comprises:
when determining that there is a Virtualized Network Function, VNF, which needs to be instantiated in a Virtualized Network Function Descriptor, VNFD, list of the network service descriptor, sending a VNF instantiation request to a VNF Manager, VNFM, wherein the VNF instantiation request carries the network service instance identifier; and
receiving a VNF instantiation complete message from the VNFM, and adding a VNF instance identifier in the VNF instantiation complete message into a VNF instance list in the generated network service instance.

4. The method according to claim 3, wherein the determining that there is a VNF which needs to be instantiated in a VNFD list of the network service descriptor comprises:
judging that one or more VNFDs in the VNFD list have no corresponding available instance.

5. The method according to claim 1, wherein the performing a network service instantiation comprises:
when determining that there is no Virtualized Network Function, VNF, which needs to be instantiated in a Virtualized Network Function Descriptor, VNFD, list of the network service descriptor and determining that there is a Virtualized Network Function Forwarding Graph, VNF FG, which needs to be instantiated in a VNF FG descriptor list of the network service descriptor, generating a VNF FG instance according to a VNF FG descriptor which needs to be instantiated in the VNF FG descriptor list, and setting a parent network service parameter parent_ns in the generated VNF FG instance to be consistent with the allocated network service instance identifier; and
generating a virtual link instance according to a virtual link descriptor list in the VNF FG descriptor which needs to be instantiated, and setting a parameter parent ns in the generated virtual link instance to be consistent with the allocated network service instance identifier.

6. The method according to claim 5, wherein the determining that there is a VNF FG which needs to be instantiated in a VNF FG descriptor list of the network service descriptor comprises:
judging that one or more VNF FG descriptors in the VNF FG descriptor list have no corresponding available instance.

7. An apparatus for establishing a network service instance, comprising:
a receiving module configured to receive a network service instantiation request from a Network Management System, NMS;
a determination module configured to determine a network service descriptor for instantiating a network service according to the received network service instantiation request;
a generation module configured to generate a network service instance according to the network service instantiation request and allocate a network service instance identifier to the generated network service instance; and
an instantiation module configured to perform a network service instantiation according to the determined network service descriptor and the allocated network service instance identifier.

8. The apparatus according to claim 7, wherein the determination module is configured to,
judge that the received network service instantiation request is valid, and determine the network service descriptor for instantiating the network service according to the received network service instantiation request.

9. The apparatus according to claim 7, wherein the instantiation module is configured to,
when determining that there is a Virtualized Network Function, VNF, which needs to be instantiated in a Virtualized Network Function Descriptor, VNFD, list of the network service descriptor, send a VNF instantiation request to a VNF Manager, VNFM, wherein the VNF instantiation request carries the network service instance identifier; and
receive a VNF instantiation complete message from the VNFM, and add a VNF instance identifier in the VNF instantiation complete message into a VNF instance list in the generated network service instance.

10. The apparatus according to claim 7, wherein the instantiation module is configured to,
when determining that there is no Virtualized Network Function, VNF, which needs to be instantiated in a Virtualized Network Function Descriptor, VNFD, list of the network service descriptor and determining that there is a Virtualized Network Function Forwarding Graph, VNF FG, which needs to be instantiated in a VNF FG descriptor list of the network service descriptor, generate a VNF FG instance according to a VNF FG descriptor which needs to be instantiated in the VNF FG descriptor list, and set a parent network service parameter parent_ns in the generated VNF FG instance to be consistent with the allocated network service instance identifier; and
generate a virtual link instance according to a virtual link descriptor list in the VNF FG descriptor which needs to be instantiated, and set a parameter parent_ns in the generated virtual link instance to be consistent with the allocated network service instance identifier.

11. A computer-readable storage medium, storing computer-executable instructions used for executing the method according to any one of claims 1-6.
